# EUROPEAN PATENT APPLICATION

(11) **EP 4 546 450 A1**
(43) Date of publication of application: **30.04.2025**
(21) Application number: 24737294.9
(22) Date of filing: 11.04.2024
(51) Int. Cl.: H01M 4/134, H01M 4/133, H01M 4/36

(54) **SILICON-CARBON COMPOSITE MATERIAL, PREPARATION METHOD THEREFOR, NEGATIVE ELECTRODE, AND BATTERY**

(30) Priority: 07.09.2023 CN 202311154535
(71) Applicant: Lanxi Zhide Advanced Materials Co., Ltd., Jinhua, Zhejiang 321100 (CN)
(72) Inventor: CHEN, Qinghua, Zhejiang 321100 (CN); FANG, Bing, Zhejiang 321100 (CN); LIU, Ruifang, Zhejiang 321100 (CN)
(74) Representative: Loyer & Abello
(86) International application number: PCT/CN2024/087279
(87) International publication number: WO 2025/050642

(57) **Abstract**

A silicon-carbon composite material and a preparation method therefor, a negative electrode and a battery specifically relate to the field of battery technologies. The silicon-carbon composite material is composed of silicon-carbon composite material particles, wherein the silicon-carbon composite material particles include a C/C composite porous material and silicon nanoparticles located in pore channels and on a surface of the C/C composite porous material; the C/C composite porous material includes a first carbon material and a second carbon material; the first carbon material is a porous carbon matrix, and the second carbon material is distributed throughout an interior of the C/C composite porous material and further throughout the silicon-carbon composite material. For the silicon-carbon composite material provided, by introducing the second carbon material to prepare the C/C composite porous material, a strong and tough electroconductive network is formed between the C/C composite porous material and the silicon nanoparticles, thereby avoiding silicon from losing contact with the carbon matrix material when changing in volume, and further improving electronic and ionic conductivities of the silicon-carbon composite material, and prolonging service lifetime of the material.

## Description

### CROSS-REFERENCE TO RELATED APPLICATION

The present application claims the priority to filing No. 202311154535X filed with the Chinese Patent Office on September 7, 2023 and entitled "SILICON-CARBON COMPOSITE MATERIAL AND PREPARATION METHOD THEREFOR, NEGATIVE ELECTRODE AND BATTERY", the contents of which are incorporated herein by reference in entirety.

### TECHNICAL FIELD

The present application relates to the field of battery technologies, and particularly to a silicon-carbon composite material and a preparation method therefor, a negative electrode (anode) and a battery.

### BACKGROUND ART

In recent years, the silicon negative electrode is continuously getting improved in performance, and the Si/C composite negative electrode material is faced with industrialization, but the performances of the silicon negative electrode need to be further improved in various aspects.

The characteristic of high specific energy of the silicon negative electrode also brings about large volume expansion (about 300%) and shrinkage of silicon during charging and discharging. By compounding a carbon material and a silicon material, the volume effect of silicon during lithium intercalation and lithium deintercalation can be alleviated to a certain extent. However, as the silicon volume is repeatedly increased and decreased, silicon and carbon are easy to separate and lose contact. Moreover, the intrinsic electronic conductivity of silicon is low, being only 10⁻⁵~10⁻³ S/cm, and the diffusion coefficient of lithium ions is also low, being 10⁻¹⁴~10⁻¹³ cm²/s, thus structure and morphology of the silicon-carbon composite material will be deteriorated and internal resistance of the battery will be increased, which leads to failure problems such as decreased energy density of the battery, decreased voltage power and heat generation of the battery.

In view of this, the present application is specifically proposed.

### SUMMARY

The first objective of the present application is to provide a silicon-carbon composite material, so as to solve the problem of deterioration of structural stability and electrochemical performances of the silicon-carbon composite material caused by loss of contact between silicon and carbon due to repeated expansion and shrinkage of silicon material in the prior art.

The second objective of the present application is to provide a preparation method for a silicon-carbon composite material.

The third objective of the present application is to provide a negative electrode.

The third objective of the present application is to provide a battery.

In order to achieve the above objectives of the present application, the following technical solutions are specifically adopted.

In the first aspect, the present application provides a silicon-carbon composite material composed of silicon-carbon composite material particles. The silicon-carbon composite material particles include a C/C composite porous material and silicon nanoparticles located in pore channels and on a surface of the C/C composite porous material. The C/C composite porous material includes a first carbon material and a second carbon material. The first carbon material is a porous carbon matrix, and the second carbon material is distributed throughout an interior of the C/C composite porous material and further throughout the silicon-carbon composite material. A size of the second carbon material in at least one dimension is greater than 100 nm.

Further, a proportion of the second carbon material in the C/C composite porous material is 0.01~10 wt.%, and the second carbon material includes at least one of carbon nanotube, graphene, carbon black and carbon fiber.

Further, a size of the second carbon material in a first dimension is L, satisfying 100 nm<L<100 µm, and a size of the second carbon material in a second dimension is a, satisfying 0<a<20 nm.

Still further, the L satisfies 100 nm<L<20 µm, and the a satisfies 0<a<10 nm.

Further, a post-compaction specific surface area of the silicon-carbon composite material is 1~20 times a specific surface area of the silicon-carbon composite material, preferably 1~10 times, and further preferably 1~5 times.

Further, a pore volume of the C/C composite porous material is 0.2~3.0 cm³/g, wherein a volume proportion of micropores is greater than 50%.

Still further, the pore volume of the C/C composite porous material is 0.4~1.5 cm³/g, wherein the volume proportion of the micropores is greater than 70%.

Further, a diameter of the silicon nanoparticles is 0.5~5 nm, and still further, a content of silicon element in the silicon-carbon composite material is 5~80 wt.%.

Further, the silicon-carbon composite material particles further include a heteroatom X located in the pore channels of the C/C composite porous material, wherein the heteroatom X includes at least one of B, N, P, O and S, and the heteroatom X forms an Si-X chemical bond with a silicon atom in the silicon nanoparticles and separates and wraps the silicon nanoparticles.

Still further, a content of the heteroatom in the silicon-carbon composite material is 0~10 wt.%.

Further, a surface of the silicon-carbon composite material particles has a coating layer. Preferably, a material of the coating layer on the surface is one or more selected from the group consisting of a solid electrolyte, an electroconductive polymer, a carbonaceous material, a metal, an alloy, a metal oxide, a metal halide, a metal sulfide, a metal phosphate, a borate, a sulfate, a nitrate and a multi-metal oxysalt.

Further, the surface of the silicon-carbon composite material particles has a coating layer of a mesh structure, and preferably, a material of the coating layer includes at least one of carbon nanotube, graphene, carbon black or carbon fiber.

Further, the silicon-carbon composite material has a specific surface area of 0.1~50 m²/g and a pore volume of 0.01~0.5 cm³/g.

Still further, the silicon-carbon composite material has the specific surface area of 0.1~10 m²/g and the pore volume of 0.01~0.1 cm³/g.

Further, the silicon-carbon composite material has a true density of 1.3~2.0 g/cm³ and a closed-pore volume of 0.01~0.25 cm³/g.

In the second aspect, the present application provides a preparation method for a silicon-carbon composite material, including following steps: step S1, providing a C/C composite porous material, wherein the C/C composite porous material includes a first carbon material and a second carbon material; the first carbon material is a porous carbon matrix, and the second carbon material is distributed throughout an interior of the C/C composite porous material and further throughout the silicon-carbon composite material; step S2, making a silicon-containing precursor contact the C/C composite porous material, to carry out chemical vapor deposition, so that silicon nanoparticles are distributed in pore channels and on a surface of the C/C composite porous material, to obtain the silicon-carbon composite material. In the above, the C/C composite porous material, the first carbon material, the second carbon material and the silicon nanoparticles respectively have the same meanings as those in the first aspect above.

Further, a preparation method for the C/C composite porous material includes introducing the second carbon material to at least one process of different preparation processes during preparation of the porous carbon material, wherein the preparation processes include a carbon precursor process, a carbon precursor pre-stabilization process, a carbonizing process, a further pore-forming process, a finished carbon material process, etc.

Preferably, the first carbon material precursor is mixed with the second carbon material, and mixture is sintered in an inert atmosphere or a mixed atmosphere of an inert gas and an oxygen-containing gas, to obtain the C/C composite porous material; or the first carbon material precursor is sintered in an inert atmosphere to obtain a first carbon material, then the first carbon material is mixed with the second carbon material, and mixture is sintered to obtain the C/C composite porous material, wherein the first carbon material precursor includes at least one of a polymer precursor, a biomass precursor and a fossil carbon source.

Further, when the silicon-containing precursor is made to contact the C/C composite porous material in step S2, a heteroatom-containing precursor is introduced. Preferably, modes of the silicon-containing precursor and the heteroatom-containing precursor contacting the C/C composite porous material include: (1) the silicon-containing precursor and the heteroatom-containing precursor alternately contacting the C/C composite porous material; (2) the silicon-containing precursor and the heteroatom-containing precursor simultaneously contacting the C/C composite porous material; or (3) alternately, the silicon-containing precursor contacting the C/C composite porous material, and the silicon-containing precursor and the heteroatom-containing precursor contacting the C/C composite porous material, or the silicon-containing precursor continuously contacting the C/C composite porous material, and the heteroatom-containing precursor intermittently contacting the C/C composite porous material. In the above, the silicon-containing precursor and the heteroatom-containing precursor contact the C/C composite porous material at a temperature of 150~1,000 °C for 1~100 h.

Further, the silicon-containing precursor includes at least one of monosilane, disilane, trisilane, halosilane, polysilane, silole and derivatives thereof, and silafluorene and derivatives thereof.

Further, the heteroatom-containing precursor includes at least one of a nitrogen-containing precursor, a phosphorus-containing precursor, a sulfur-containing precursor or a boron-containing precursor.

In the third aspect, the present application provides a negative electrode, wherein the negative electrode includes the silicon-carbon composite material according to the first aspect or the silicon-carbon composite material obtained by the preparation method according to the second aspect.

In the fourth aspect, the present application provides a battery, including a positive electrode, a negative electrode, an electrolytic solution and a separator, wherein the negative electrode includes the silicon-carbon composite material according to the first aspect or the silicon-carbon composite material obtained by the preparation method according to the second aspect.

Compared with the prior art, the present application at least has the following beneficial effects.

For the silicon-carbon composite material provided in the present application, by introducing the second carbon material to prepare the C/C composite porous material, a strong and tough electroconductive network is formed between the porous carbon matrix and the silicon nanoparticles, thereby avoiding silicon from losing contact with the porous carbon matrix when changing in volume, and further improving electronic and ionic conductivities of the silicon-carbon composite material. The second carbon material is a reinforced and toughened material, forms a flexible constraining network to silicon expansion, and meanwhile ensures structural stability under a low SOC condition, thereby improving cycling stability and structural stability of the silicon-carbon composite material.

In the preparation method for a silicon-carbon composite material provided in the present application, the precursor of the first carbon material loses micromolecular organic matters during sintering and pore-forming activation, generates and releases small molecules such as CO₂ and H₂O, and forms the porous carbon matrix. Meanwhile, the second carbon material substantially will not lose weight and form pores along with sintering and pore-forming processes, and still retain an original size and structure; therefore, a composite structure in which the second carbon material is distributed throughout the C/C composite porous material, and after silicon is deposited inside the pore channels of the C/C composite porous material, a composite structure in which the second carbon material is distributed throughout the silicon-carbon composite material is formed. Thus, the prepared silicon-carbon composite material has the same beneficial effects as those of the silicon-carbon composite material provided in the above.

### BRIEF DESCRIPTION OF DRAWINGS

In order to more clearly illustrate technical solutions of examples of the present application, drawing which needs to be used in the examples will be briefly introduced below. It should be understood that the drawing merely shows some examples of the present application, and thus should not be considered as limitation to the scope. Those ordinarily skilled in the art still could obtain other relevant drawings according to these drawings, without using any inventive efforts.

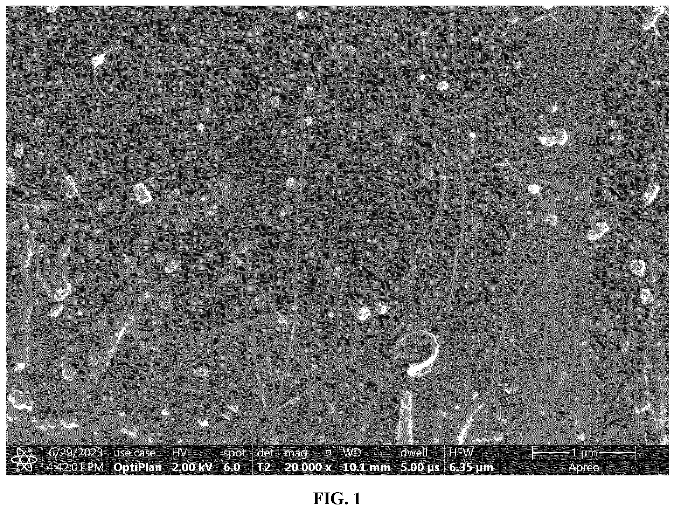

FIG. 1 shows an SEM image of a silicon-carbon composite material obtained in Example 6.

### DETAILED DESCRIPTION OF EMBODIMENTS

Embodiments of the present application will be described in detail below in combination with examples, while those skilled in the art would understand that the following examples are merely used for illustrating the present application, but should not be considered as limitation to the scope of the present application. The examples, for which specific conditions are not specified, are carried out under conventional conditions or manufacturer-recommended conditions. Where manufacturers of reagents or apparatus used are not specified, they are commercially available conventional products.

Endpoints and any value of ranges disclosed herein are not limited to the precise ranges or values, and these ranges or values should be understood as encompassing values close to these ranges or values. For numerical ranges, endpoint values of various ranges can be combined with each other, endpoint values of various ranges and individual point values can be combined with each other, and individual point values can be combined with each other to obtain one or more new numerical ranges, and such numerical ranges should be construed as specifically disclosed herein.

In the first aspect, the present application provides a silicon-carbon composite material composed of silicon-carbon composite material particles, wherein the silicon-carbon composite material particles include a C/C composite porous material and silicon nanoparticles located in pore channels and on a surface of the C/C composite porous material; the C/C composite porous material includes a first carbon material and a second carbon material; the first carbon material is a porous carbon matrix, and the second carbon material is distributed throughout an interior of the C/C composite porous material and further throughout the silicon-carbon composite material; and a size of the second carbon material in at least one dimension is greater than 100 nm.

For the silicon-carbon composite material provided in the present application, by introducing the second carbon material to prepare the C/C composite porous material, a strong and tough electroconductive network is formed between the porous carbon matrix and the silicon nanoparticles, thereby avoiding silicon from losing contact with the porous carbon matrix when changing in volume, and further improving electronic and ionic conductivities of the silicon-carbon composite material. The second carbon material, a reinforced and toughened material, forms a flexible constraining network to silicon expansion, and meanwhile ensures structural stability under a low SOC condition, thereby improving cycling stability and structural stability of the silicon-carbon composite material.

The second carbon material has following effects in the silicon-carbon composite material particles: (1) under the low SOC condition, the second carbon material forms conductive whiskers in the composite material, the conductive whiskers connect the silicon nanoparticles and the porous carbon matrix to form electrically conductive paths, thereby avoiding the risk of detachment of the silicon nanoparticles from the porous carbon matrix caused by shrinkage of the silicon nanoparticles under a low load condition, further improving the electrical conductivity, and thus reducing resistance DCIR of a battery body system containing the composite material; (2) a transmission path is constructed, improving rate capability; and (3) the second carbon material is compounded with the first carbon material, forming an elastic mesh body, thereby improving compressive strength of the material.

In some embodiments, a proportion of the second carbon material in the C/C composite porous material is 0.01~10 wt.%, and the second carbon material includes at least one of carbon nanotube, graphene, carbon black and carbon fiber. If the proportion of the second carbon material in the C/C composite porous material is greater than 10 wt.%, homogeneity of pore distribution in the C/C composite porous material will be affected, and further homogeneity of the silicon nanoparticles in the silicon carbon composite material is affected, causing decreased material performances. Moreover, the second carbon material is expensive, and too much introduction will increase the cost. Typically, but not by way of limitation, the proportion of the second carbon material in the C/C composite porous material is 0.01 wt.%, 0.1 wt.%, 0.5 wt.%, 1 wt.%, 3 wt.%, 5 wt.%, 7 wt.%, 9 wt.%, 10 wt.% or a range value between any two numerical values thereof.

Further, a size of the second carbon material in a first dimension is L, satisfying 100 nm<L<100 µm, and a size of the second carbon material in a second dimension is a, satisfying 0<a<20 nm. Still further, the L satisfies 100 nm<L<20 µm, and the a satisfies 0<a<10 nm. In a three-dimensional space, the second carbon material satisfies that the size in the first dimension is L and the size in the second dimension is a. In some specific embodiments, the second carbon material is, for example, carbon nanotube (CNT), where L is length, and a is diameter. For another example, the second carbon material is graphene, where L is length or width of a graphene plane, and a is sheet thickness. A smaller size a of the second carbon material in the second dimension leads to better flexibility, higher strength, higher stability of the formed C/C composite material, and further higher stability of the silicon-carbon composite material, and stronger constraint to the expansion of silicon.

In some examples, as the material is more likely to withstand pressure without damage due to strong mechanical strength and structural stability, a ratio of a post-compaction specific surface area of the silicon-carbon composite material to a specific surface area of the silicon-carbon composite material is small. The post-compaction specific surface area refers to a specific surface area of the silicon-carbon composite after being compacted at a pressure of 4,000 kgf/cm². The post-compaction specific surface area of the silicon-carbon composite material (the specific surface area of the silicon-carbon composite material after being compacted under the pressure of 4,000 kgf/cm²) is 1~20 times the specific surface area of the silicon-carbon composite material, preferably 1~10 times, and further preferably 1~5 times.

In some examples, a pore volume of the C/C composite porous material is 0.2~3.0 cm³/g, wherein a volume proportion of micropores is greater than 50%. Preferably, in some examples, the pore volume of the C/C composite porous material is 0.4~1.5 cm³/g, wherein the volume proportion of the micropores is greater than 70%.

In some examples, a diameter of the silicon nanoparticles is 0.5~5 nm. Preferably, in some examples, a content of silicon element in the silicon-carbon composite material is 5~80 wt.% (for example, 5 wt.%, 10 wt.%, 20 wt.%, 30 wt.%, 40 wt.%, 50 wt.%, 60 wt.%, 70 wt.%, 80 wt.% or a range value between any two numerical values thereof).

In some examples, the silicon-carbon composite material particles further include a heteroatom X located in the pore channels of the C/C composite porous material, wherein the heteroatom X includes at least one of B, N, P, O and S, and the heteroatom X forms an Si-X chemical bond with a silicon atom in the silicon nanoparticles and separates and wraps the silicon nanoparticles. Preferably, in some examples, a content of the heteroatom in the silicon-carbon composite material is 0~10 wt.%.

In some examples, a surface of the silicon-carbon composite material has a coating layer. Preferably, in some examples, a material of the coating layer on the surface is one or more selected from the group consisting of a solid electrolyte, an electroconductive polymer, a carbonaceous material, a metal, an alloy, a metal oxide, a metal halide, a metal sulfide, a metal phosphate, a borate, a sulfate, a nitrate, a multi-metal oxysalt, and the like.

Further preferably, in some examples, the carbonaceous material includes, but is not limited to, carbon nanotube, graphene, carbon black or carbon fiber. In some examples, the organic polymer includes, but is not limited to, polyethylene oxide, polyethylene glycol, phenolic resin, epoxy resin or polysaccharide.

In some examples, the coating layer includes, but is not limited to, one or more of lithium hydroxide, lithium carbonate, lithium fluoride, lithium phosphate, lithium metaphosphate, aluminum dihydrogen phosphate, lithium metaaluminate, lithium aluminum phosphate, aluminum phosphate, aluminum metaphosphate, aluminum oxide, aluminum oxide monohydrate, aluminum oxide trihydrate, aluminum hydroxide, aluminum sol, aluminum isopropoxide, magnesium oxide, magnesium hydroxide, zinc oxide, zinc hydroxide, titanium oxide, zirconium oxide, LiPON (lithium phosphorus oxynitride), LLZO (lithium lanthanum zirconium oxide), LATP (lithium aluminum titanium phosphate), LLTO (lithium lanthanum titanium oxide), lithium germanium phosphorous sulfide compound, and the like. In some examples, the coating layer includes, but not limited to, one or more of polymers such as polyethylene oxide, carboxymethylcellulose, polyacrylic acid or polyacrylonitrile, and lithium complexes thereof. In some examples, the coating layer includes, but is not limited to, one or more of a LISICON type solid electrolyte, a NASICION type solid electrolyte, a perovskite type solid electrolyte, a garnet type solid electrolyte and a sulfide solid state electrolyte. In some examples, the coating layer includes, but is not limited to, one or more of metal phosphate, borate, sulfate, nitrate, and multi-metal oxysalt, etc.

In some examples, a surface of the silicon-carbon composite material particles has a coating layer of a mesh structure, and preferably, a material of the coating layer includes at least one of carbon nanotube, graphene, carbon black or carbon fiber. The carbon material forms a coating mesh structure on the surface of the composite material, and can constrain the volume expansion of the silicon nanoparticles inside the material. The network coating formed by the carbon material forms an electrically conductive path, thus greatly reducing resistivity of the composite material, stabilizing an interface, stabilizing an SEI film, and reducing consumption of lithium ions.

In some examples, the silicon-carbon composite material has a specific surface area of 0.1~50 m²/g and a pore volume of 0.01~0.5 cm³/g. Preferably, in some examples, the silicon-carbon composite material has the specific surface area of 0.1~10 m²/g and the pore volume of 0.01~0.1 cm³/g.

In some examples, the silicon-carbon composite material has a true density of 1.3~2.0 g/cm³ and a closed-pore volume of 0.01~0.25 cm³/g.

In the second aspect, the present application provides a preparation method for a silicon-carbon composite material, including following steps: step S1, providing a C/C composite porous material, wherein the C/C composite porous material includes a first carbon material and a second carbon material, the first carbon material is a porous carbon matrix, and the second carbon material is distributed throughout an interior of the C/C composite porous material and further throughout the silicon-carbon composite material; step S2, making a silicon-containing precursor contact the C/C composite porous material, to carry out chemical vapor deposition, so that silicon nanoparticles are distributed in pore channels and on a surface of the C/C composite porous material, to obtain the silicon-carbon composite material, wherein the C/C composite porous material, the first carbon material, the second carbon material and the silicon nanoparticles respectively have the same meanings as those in the first aspect above.

In the preparation method for a silicon-carbon composite material provided in the present application, the precursor of the first carbon material loses micromolecular organic matters during sintering and pore-forming activation, generates and releases small molecules such as CO₂ and H₂O, and forms the porous carbon matrix. Meanwhile, the second carbon material substantially will not lose weight and form pores along with the sintering and pore-forming processes, and still retains an original size and structure; therefore, a composite structure in which the second carbon material is distributed throughout the C/C composite porous material, and after silicon is deposited inside the pore channels of the C/C composite porous material, a composite structure in which the second carbon material is distributed throughout the silicon-carbon composite material is formed. Thus, the prepared silicon-carbon composite material has the same beneficial effects as those of the silicon-carbon composite material provided in the above.

In some examples, a preparation method for the C/C composite porous material is: introducing the second carbon material to at least one process of different preparation processes during preparation of the porous carbon material, wherein the preparation processes include a carbon precursor process, a carbon precursor pre-stabilization process, a carbonizing process, a further pore-forming process, a finished carbon material process, etc.

Preferably, in some examples, the first carbon material precursor is mixed with the second carbon material, and the mixture is sintered in an inert atmosphere or a mixed atmosphere of an inert gas and an oxygen-containing gas, to obtain the C/C composite porous material.

In some other examples, the preparation method for the C/C composite porous material includes: sintering the first carbon material precursor in an inert atmosphere to obtain a first carbon material, then mixing the first carbon material and the second carbon material, and sintering the mixture to obtain the C/C composite porous material.

In some examples, during the preparation of the C/C composite porous material, a pore-forming agent may be added with the first carbon material precursor, to form a porous carbon matrix with rich pore structures after sintering. The pore forming agent is one or more selected from the group consisting of sodium dodecyl benzene sulfonate, cetyltrimethylammonium bromide, polyethylene glycol, polyvinyl alcohol, polyvinyl pyrrolidone, oleic acid, oleylamine, polyethylene oxide-polypropylene oxide-polyethylene oxide triblock copolymer (such as P123, F127 and/or F108), citric acid, malic acid, succinic acid, NH₄HCO₃, (NH₄)₂CO₃, HNO₃, H₂SO₄, LiOH, NaOH, KOH, and the like.

In some examples, the first carbon material precursor includes at least one of a polymer precursor, a biomass precursor and a fossil carbon source. For example, the first carbon material precursor may be, but is not limited to, one or more of glucose, sucrose, maltose, lactose, cyclodextrin, starch, glycogen, cellulose, hemicellulose, lignin, epoxy resin, thermoplastic phenolic resin, thermosetting phenolic resin, polyoxymethylene resin, urea resin, furfural resin, furfural acetone resin, acrylic resin, coconut shell, rice hull and wood.

In some examples, the above steps of preparing the C/C composite porous material further include performing activating pore-formation on resulting C/C composite porous material, specifically: making the C/C composite porous material contact an oxygen-containing material, wherein the oxygen-containing material includes, but is not limited to, a gas such as H₂O, CO₂ and O₂, a solid such as KOH, NaOH, K₂CO₃, Na₂CO₃, potassium salt of aldehyde acid, and sodium acetate and an aqueous solution thereof, and H₃PO₄ or an aqueous solution thereof, and modes of the contact include gas-solid contact, solid-solid contact and solid-liquid contact, a temperature of the contact is 300~1,200 °C (such as 300 °C, 400 °C, 500 °C, 600 °C, 700 °C, 800 °C, 900 °C, 1,000 °C, 1,100 °C, 1,200 °C or a temperature between any two thereof), preferably, 600~900 °C.

In some examples, the silicon-containing precursor contacts the C/C composite porous material in step S2 at a temperature of 150~1,000 °C for a time of 1~100 h.

In some examples, when the silicon-containing precursor is made to contact the C/C composite porous material in step S2, a heteroatom-containing precursor is introduced. Preferably, modes of the silicon-containing precursor and the heteroatom-containing precursor contacting the C/C composite porous material include: (1) the silicon-containing precursor and the heteroatom-containing precursor alternately contacting the C/C composite porous material; or, (2) the silicon-containing precursor and the heteroatom-containing precursor simultaneously contacting the C/C composite porous material; or (3) alternately, the silicon-containing precursor contacting the C/C composite porous material, and the silicon-containing precursor and the heteroatom-containing precursor contacting the C/C composite porous material, or the silicon-containing precursor continuously contacting the C/C composite porous material and the heteroatom-containing precursor intermittently contacting the C/C composite porous material.

Further, the silicon-containing precursor and the heteroatom-containing precursor contact the C/C composite porous material at a temperature of 150~1,000 °C (e.g., 150 °C, 200 °C, 300 °C, 400 °C, 500 °C, 600 °C, 700 °C, 800 °C, 900 °C, 1,000 °C or a temperature between any two thereof) for a time of 1~100 h (e.g., 1 h, 12 h, 24 h, 36 h, 48 h, 72 h, 96 h, 100 h or a time between any two thereof).

In some examples, the silicon-containing precursor includes at least one of monosilane, disilane, trisilane, halosilane, polysilane, silole and derivatives thereof, and silafluorene and derivatives thereof.

In some examples, the heteroatom-containing precursor includes, but is not limited to, any one or a mixture of two or more of a boron-containing precursor, a nitrogen-containing precursor, a phosphorus-containing precursor, an oxygen-containing precursor and a sulfur-containing precursor. In the above, the boron-containing precursor includes B(CH₃)₃; the nitrogen-containing precursor includes NH₃, NO, N₂O and acetonitrile; the phosphorous-containing precursor includes PH₃ and POCl₃; the oxygen-containing precursor includes oxygen gas, carbon dioxide, water vapor, methanol, ethanol, n-propanol, isopropanol, butanol, acetone and butyl ketone; and the sulfur-containing precursor includes any one or a mixture of two or more of H₂S and SO₂.

In the third aspect, the present application provides a negative electrode, wherein the negative electrode includes the silicon-carbon composite material provided in the first aspect or the silicon-carbon composite material obtained according to the preparation method provided in the second aspect.

In the fourth aspect, the present application provides a battery, including a positive electrode, a negative electrode, an electrolytic solution and a separator, wherein the negative electrode includes the silicon-carbon composite material provided in the first aspect or the silicon-carbon composite material obtained by the preparation method provided in the second aspect. The use of the above silicon-carbon composite material effectively improves energy density of the battery, reduces internal resistance, and has a wide application prospect.

The present application is further illustrated below with specific examples and comparative examples, but it is to be understood that these examples are merely used for giving more detailed description and should not be construed as limiting the present application in any form. The examples and comparative examples in the present application, for which specific conditions of materials are not specified, are carried out under conventional conditions or manufacturer-recommended conditions. Where manufacturers of reagents or apparatus used are not specified, they are commercially available conventional products.

### Example 1

The present example provides a silicon-carbon composite material, for which a preparation method was as follows.
(1) Sucrose and single-walled carbon nanotubes (from Dazhan Nano (Guangdong) Co., Ltd., with an outer diameter ranging 1.6±0.4 nm and a length of ≥ 5 µm) were mixed in a mass ratio of 100/0.01, and resulting mixture was heated from a room temperature to 800 °C at 2 °C/min in a N₂ atmosphere, and kept at this temperature for 2 h; resulting material was crushed and classified, and then mixed with KOH in m(KOH): m(C)=1:2, and the resultant was activated at 800 °C for 2 h to obtain the C/C composite porous material. In the above, a proportion of the carbon nanotubes in a porous composite skeleton was 0.1 wt.%, a pore volume of the C/C composite porous material was 0.80 cm³/g, and a proportion of a volume of micropores in the pore volume was 85%.
(2) The C/C composite porous material was placed in a tubular furnace, and heated from a room temperature to 600 °C at 2 °C/min in a N₂ atmosphere; then the atmosphere was changed into 20% SiH₄-N₂ mixed atmosphere, and the C/C composite porous material was kept in the 20% SiH₄-N₂ mixed atmosphere at 600 °C for 30 h; and the atmosphere was changed into a N₂ atmosphere, and the material was naturally cooled, crushed and classified, to obtain the silicon-carbon composite material. In the above, a silicon content in the silicon-carbon composite material was 52 wt.%.

### Example 2

The present example provides a silicon-carbon composite material, for which a preparation method was as follows.
(1) Different from this step in Example 1, the proportion of the single-walled carbon nanotubes in the C/C composite porous material was 0.01 wt.%, and remaining raw materials and methods were the same as those in this step in Example 1, which are not repeated herein.
(2) was the same as that in Example 1.

### Example 3

The present example provides a silicon-carbon composite material, for which a preparation method was as follows.
(1) Different from this step in Example 1, the proportion of the single-walled carbon nanotubes in the C/C composite porous material was 0.5 wt.%, and remaining raw materials and methods were the same as those in this step in Example 1, which are not repeated herein.
(2) was the same as that in Example 1.

### Example 4

The present example provides a silicon-carbon composite material, for which a preparation method was as follows.
(1) Different from this step in Example 1, graphene (from Dongli New Materials (Guangdong) Co., Ltd., with a sheet thickness of < 15 nm, and length or width of a graphene plane of 3~6 µm) was used to replace the single-walled carbon nanotubes, a proportion of the graphene in the porous composite skeleton was 2 wt.%, and remaining raw materials and methods were the same as those in this step in Example 1, which are not repeated herein.
(2) was the same as that in Example 1.

### Example 5

The present example provides a silicon-carbon composite material, for which a preparation method was as follows.
(1) was the same as that in Example 1.
(2) The C/C composite porous material was placed in a tubular furnace, and heated from a room temperature to 600 °C at 2 °C/min in a N₂ atmosphere; then the atmosphere was changed into 20% SiH₄-0.002%CO₂-N₂ mixed gas, and the C/C composite porous material was kept in 20% SiH₄-N₂ mixed atmosphere at 600 °C for 30 h; and the atmosphere was changed into a N₂ atmosphere, and the material was naturally cooled, crushed and classified, to obtain the silicon-carbon composite material.

### Example 6

The present example provides a silicon-carbon composite material, for which a preparation method was as follows.
(1) was the same as that in Example 1.
(2) was the same as that in Example 1.
(3) Silicon-carbon composite material particles were uniformly dispersed into pure water, to which CNT (from the same manufacturer and of the same model as the single-walled carbon nanotubes in Example 1) with a mass fraction of 0.4% was added, and resulting mixture was stirred uniformly and then spray-dried to obtain a CNT-coated silicon-carbon composite material.

### Example 7

The present example provides a silicon-carbon composite material, for which a preparation method was as follows:
(1) was the same as that in Example 1.
(2) was the same as that in Example 1.
(3) Silicon-carbon composite material particles were uniformly dispersed into pure water, to which CNT (from the same manufacturer and of the same model as the single-walled carbon nanotubes in Example 1) with a mass fraction of 1% and lithium phosphate with a mass fraction of 3% were added, resulting mixture was stirred uniformly, and then filtered and dried, to obtain a silicon-carbon composite material with a composite fast ionic conductor coating layer, wherein a mass ratio of CNT to lithium phosphate was 0.3:1, and a thickness of the coating layer was 6 nm, and the silicon-carbon composite material was obtained.

### Example 8

The present example provides a silicon-carbon composite material, for which a preparation method was as follows.
(1) Different from this step in Example 1, multi-walled carbon nanotubes (from BEIJING ZHONGKELEIMING DAOJIN TECHNOLOGY CO., LTD., with an outer diameter of 30~60 nm, an inner diameter of 20~50 nm, and a length of 1~10 µm) were used to replace the single-walled carbon nanotubes, a proportion of the carbon nanotubes in the porous composite skeleton was 10 wt.%, and remaining raw materials and methods were the same as those in this step in Example 1, which are not repeated herein.
(2) was the same as that in Example 1.

### Example 9

The present example provides a silicon-carbon composite material, for which a preparation method was as follows.
(1) Different from this step in Example 1, multi-walled carbon nanotubes (from Shenzhen Tuling New Material Co., Ltd, with a diameter of 3~15 nm and a length of 15~30 µm) were used to replace the single-walled carbon nanotubes, a proportion of the carbon nanotubes in the porous composite skeleton was 5 wt.%, and remaining raw materials and methods were the same as those in this step in Example 1, which are not repeated herein.
(2) was the same as that in Example 1.

### Example 10

(1) Sucrose and single-walled carbon nanotubes (from Dazhan Nano (Guangdong) Co., Ltd., with an outer diameter ranging 1.6±0.4 nm and a length of ≥ 5 µm) were mixed in a mass ratio of 100/0.01, and resulting mixture was heated from a room temperature to 800 °C at 2 °C/min in a N₂ atmosphere, and kept at this temperature for 2 h; resulting material was crushed and classified, and then mixed with KOH in m(KOH): m(C)=1:2, and the resultant was activated at 800 °C for 0.5 h to obtain a C/C composite porous material. In the above, a proportion of the carbon nanotubes in a porous composite skeleton was 0.15 wt.%, a pore volume of the C/C composite porous material was 0.40 cm³/g, and a proportion of a volume of micropores in the pore volume was 88%.
(2) The C/C composite porous material was placed in a tubular furnace, and heated from a room temperature to 600 °C at 2 °C/min in a N₂ atmosphere; then the atmosphere was changed into 10% SiH₄-N₂ mixed atmosphere, and the C/C composite porous material was kept in the 10% SiH₄-N₂ mixed atmosphere at 600 °C for 10 h; and the atmosphere was changed into a N₂ atmosphere, and the material was naturally cooled; when temperature reached the room temperature, dry air was introduced, temperature was slowly raised to 200 °C after 2 h, and the material was kept in an air atmosphere for 2 h; and the material was heated to 600 °C in a N₂ atmosphere, and then the atmosphere was changed into 10% C₂H₂-N₂ and kept for 2 h; and resulting material was crushed and classified, to obtain the silicon-carbon composite material. In the above, a silicon content in the resulting silicon-carbon composite material was 8 wt.%.

### Example 11

(1) Sucrose and single-walled carbon nanotubes (from Dazhan Nano (Guangdong) Co., Ltd., with an outer diameter ranging 1.6±0.4 nm and a length of ≥ 5 µm) were mixed in a mass ratio of 100/0.01, and resulting mixture was heated from a room temperature to 800 °C at 2 °C/min in a N₂ atmosphere, and kept at this temperature for 2 h; resulting material was crushed and classified, and then mixed with KOH in m(KOH): m(C)=1:2, and the resultant was activated at 800 °C for 5 h to obtain a C/C composite porous material. In the above, a proportion of the carbon nanotubes in a porous composite skeleton was 0.06 wt.%, a pore volume of the C/C composite porous material was 1.50 cm³/g, and a proportion of a volume of micropores in the pore volume was 86%.
(2) Different from this step in Example 1, a volume content of SiH₄ in the SiH₄-N₂ mixed gas was changed to 30%, deposition time was changed to 40 h, and remaining raw materials and methods were the same as those in this step in Example 1, which are not repeated herein. In the above, a silicon content in the resulting silicon-carbon composite material was 78 wt.%.

### Comparative Example 1

The present comparative example provides a silicon-carbon composite material, for which a preparation method was as follows.
(1) Sucrose was heated from a room temperature to 800 °C at 2 °C/min in a N₂ atmosphere, and kept at this temperature for 2 h; and resulting material was crushed and classified, and then mixed with KOH in m(KOH): m(C)=1:2, and the mixture was activated at 800 °C for 2 h, to obtain porous carbon.
(2) The porous carbon was placed in a tubular furnace, and heated from a room temperature to 600 °C at 2 °C/min in a N₂ atmosphere; then the atmosphere was changed into 20% SiH₄-N₂ mixed atmosphere, and the porous carbon was kept in the 20% SiH₄-N₂ mixed atmosphere at 600 °C for 30 h; and the atmosphere was changed into a N₂ atmosphere, and the porous carbon was naturally cooled, crushed and classified, to obtain the silicon-carbon composite material.

### Test Example 1

The silicon-carbon composite materials obtained in Example 1~9 and Comparative Example 1 were measured for physical and chemical parameters.

Specific surface areas of the particles were measured by a specific surface area analyzer.

True densities of the particles were measured by a full-automatic true density analyzer.

Post-compaction specific surface area: powder was loaded into a mould with a diameter of 12 mm, and applied with a pressure of 4,000 kgf/cm² for 30 s. The specific surface area of the compacted material was measured and recorded as the post-compaction specific surface area. A smaller ratio of the post-compaction specific surface area to the specific surface area indicates higher compressive resistance of the material.

Data obtained are shown in Table 1 below.

**Table 1 Table of Physical and Chemical Parameters of Silicon-carbon Composite Materials**

| | Specific Surface Area (cm³/g) | Post-compaction Specific Surface Area (cm³/g) | Post-compaction Specific Surface Area/Specific Surface Area | True Density (g/cm³) | Closed-pore Volume (cm³/g) |
|---|---|---|---|---|---|
| Example 1 | 2.5 | 16.1 | 6.4 | 1.82 | 0.10 |
| Example 2 | 2.5 | 28.5 | 11.4 | 1.85 | 0.09 |
| Example 3 | 2.6 | 12.0 | 4.6 | 1.76 | 0.12 |
| Example 4 | 3.1 | 16.8 | 5.4 | 1.79 | 0.11 |
| Example 5 | 2.0 | 10.5 | 5.3 | 1.81 | 0.10 |
| Example 6 | 1.5 | 6.4 | 4.3 | 1.84 | 0.09 |
| Example 7 | 2.4 | 18.5 | 7.7 | 1.80 | 0.10 |
| Example 8 | 2.6 | 35.2 | 13.5 | 1.65 | 0.15 |
| Example 9 | 2.3 | 28.4 | 12.3 | 1.72 | 0.13 |
| Example 10 | 2.5 | 4.8 | 1.9 | 1.68 | 0.14 |
| Example 11 | 2.2 | 8.9 | 4.0 | 1.70 | 0.14 |
| Comparative Example 1 | 2.3 | 92 | 40.0 | 1.85 | 0.09 |

It can be seen from Table 1 that, Example 1~11 had lower ratios of the post-compaction specific surface area to the specific surface area than the comparative example, which indicates that the silicon-carbon composite material, obtained by carrying out the chemical vapor deposition of silicon using as a matrix the C/C composite material added with the second carbon material, has higher compressive strength, and an electrode prepared from the materials of the examples will exhibit higher cycling stability. In the above, the single-walled carbon nanotubes and graphene having a smaller size in the second dimension more obviously improve the compressive strength of the material, for example, the ratios of the post-compaction specific surface area to the specific surface area in Examples 1~6 were smaller than those in Examples 8 and 9, and correspondingly, the electrochemical performances thereof were slightly poor. CO₂ passivation was carried out in Example 5, compared with Example 1, and weak oxidation property thereof made part of the silicon nanoparticles wrapped by an oxygen-containing material, such as SiOₓ material (0<x<1), and thus the composite material exhibited higher compressive strength. CNT coating was carried out in Example 6 on the basis of Example 1, which further improved the compressive strength of the composite material. Lithium phosphate coating was added in Example 7 on the basis of Example 1, that is, CNT and lithium phosphate were used for composite coating. In Examples 8 and 9, the multi-walled tubes with a larger diameter were used to replace the single-walled CNT for coating, wherein the multi-walled carbon nanotubes had a relatively large diameter and greatly reduced flexibility, and a high addition amount was required to form a suitable electroconductive network in the composite material, and the compacted density of the material was reduced, further affecting the electrochemical stability thereof. Examples 10 and 11 are cases of relatively low and relatively high silicon contents, respectively, wherein when the silicon content was relatively low, the required C/C composite porous material matrix had a relatively small pore volume; therefore, the CNT content in the C/C composite porous material obtained by adding the same proportion of CNT into the precursor was relatively large, and thus the CNT content in a final silicon-carbon composite material was also relatively large, and this material had the minimum post-compaction specific surface area, that is, this composite material had the highest compact resistance. The porous carbon matrix in Comparative Example 1 did not contain the second carbon material, and the specific surface area of resulting silicon-carbon composite material was increased to 92 m²/g after being compacted under the pressure of 4,000 kgf/cm², and thus it can be seen that compressive strength of the composite material is quite low, which will greatly affect its cycling stability in lithium ion batteries.

### Test Example 2

The silicon-carbon composite material provided in Example 6 was observed by field emission scanning electron microscopy, and an SEM image obtained is shown in FIG. 1. It can be seen from FIG. 1 that the CNT is coated outside the particles to form a criss-cross electroconductive network. In SEM images of Examples 1~5, it is not easy to directly observe existence of the second carbon material, because the second carbon material such as CNT and graphene was in the scale of 10 nm or below or even 3 nm or below in a diameter or thickness direction, was closely connected to the first carbon material in the C/C composite porous material, and was generally located inside the composite material, and thus it was hard to observe the second carbon material on the surface of the composite material.

### Test Example 3

The silicon-carbon composite materials obtained in Examples 1~9 and Comparative Example 1 were tested for powder resistivity under a pressure of 20 MPa by a ST2722-SZ type four-probe powder resistivity tester manufactured by Suzhou Jingge Electronic Co., Ltd., and data obtained are shown in Table 2.

### Test Example 4

The silicon-carbon composite materials obtained in Examples 1~9 and Comparative Example 1 were taken as negative electrode active materials, to respectively prepare negative electrode plates, and prepare CR2032 type button batteries by a conventional method, and the batteries were tested for electrical performances. A specific test method was as follows.
(1) Half battery assembly: CR2032 type button battery was assembled in a glove box, wherein a lithium metal sheet was a counter electrode, a polypropylene microporous membrane was a separator, an electrolytic solution was LiPF₆ dissolved in a mixed solution of ethyl carbonate (EC) and diethyl carbonate (DEC) (in a volume ratio of EC:DEC being 1:1), and wherein concentration of LiPF₆ was 1 mol/L.
   A charge-discharge test was carried out on the battery using a LAND battery test system.
(2) Test for capacity per gram and initial efficiency: after standing for 6 h, the CR2032 type button battery was discharged to 0.005 V at 0.05 C, and then discharged to 0.005 V at 0.01 C; after standing for 5 min, the battery was charged to 1.5 V at 0.05 C constant current. Initial lithium deintercalation capacity per gram was the capacity per gram of the electrode material (or called as mass specific capacity).

Data obtained are shown in Table 2.

### Test Example 5

The silicon-carbon composite materials obtained in Examples 1~9 and Comparative Example 1 were taken as negative electrode active materials, electrode plates containing the negative electrode active materials were prepared into pouch batteries by a conventional method, and electrical performance test was carried out. The pouch batteries were prepared in a dehumidification room with a dew point of -45 °C. Charge-discharge cycle test was carried out on the batteries using a LANBTS battery test system. A specific test method was as follows.
(1) Fabrication of positive electrode plate: a positive electrode active material NCM811, a conductive agent Super P, a binder PVDF and a solvent NMP were stirred and mixed well in a mass ratio of 92:3:5:150, uniformly coated onto a positive electrode current collector, and then dried at 80 °C to obtain the positive electrode plate.
(2) Fabrication of negative electrode plate: the silicon-carbon composite materials obtained in Examples 1~9 and Comparative Example 1 were respectively mixed with graphite to obtain a negative electrode active material, the negative electrode active material, the conductive agent Super P, a binder polyacrylic acid and a solvent deionized water were stirred and mixed well in a mass ratio of 95:1:4:120, uniformly coated onto a negative electrode current collector, and then dried at 100 °C to obtain the negative electrode plate.
(3) The positive electrode plate and the negative electrode plate were laminated by square lamination and isolated by a polypropylene separator to prepare a battery cell. The battery cell was packaged in an aluminum plastic bag, into which an electrolytic solution of a corresponding volume was injected. The aluminum plastic bag was vacuum-sealed to obtain the pouch battery. The electrolytic solution was LiPF₆ in a mixed solution of EC and DEC, wherein concentration of LiPF₆ was 1 mol/L, and a volume ratio of EC to DEC was 1:1.
(4) Formation and capacity grading: after the injection of the electrolytic solution and sealing, the battery started to undergo formation. After standing in a 25 °C incubator for 12 h, the battery was charged to 3.3 V at 0.02 C constant current, followed by standing for 30 min, being charged to 3.8 V at 0.025 C constant current, standing for 10 min, and being charged to 4.2 V at 0.33 C constant current; after the formation of the battery, the vacuum bag was cut, and then 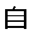 capacity grading was carried out, by charging to 4.45 V at 0.33 C constant current, standing for 10 min, discharging to 3 V at 1 C constant current, standing for 10 min, and discharging to 3 V at 0.33 C constant current, and then the capacity grading was ended. A ratio of discharge capacity to charge capacity in the formation and capacity grading of the pouch battery was initial Coulombic efficiency of the battery.
(5) 25 °C cycle test: the battery was placed in a 25 °C incubator, charged to 4.45 V at 1 C constant current, charged to 0.1 C current at 4.45 V constant voltage; after standing for 10 min, the battery was discharged to 3.0 V at 1 C constant current, and stood for 10 min. The above charge and discharge steps were repeated, until the discharge capacity was lower than 80% of discharge capacity of first cycle, and in this case, the number of cycles obtained was cycle life of the pouch battery. 100-cycle capacity retention rate was recorded.
   Rate capability test: the prepared button full battery stood under a room temperature for 12 h, and then was subjected to a constant current charge-discharge test in a LAND test system. A cut-off voltage of charge and discharge was 3.0~4.25 V. The button full battery was firstly charged and discharged at 0.25 C current for 3 cycles. Then, it was charged and discharged at 0.5 C current for 3 cycles. Finally, it was charged and discharged at 1 C current for 3 cycles. The capacity retention rate was calculated by discharge capacity of the 9^{th} cycle/discharge capacity of the first cycle×100%. A higher value is considered as indicating better rate capability.
(7) DCIR test: the battery having undergone formation and capacity grading was placed in a 25 °C incubator and charged to 4.45 V at 1 C constant current, and a charging capacity was recorded as Q₁. After standing for 10 min, the battery was discharged to 3.0 V at 1 C constant current, followed by standing for 10 min. The battery continued to be charged to capacity Q₂ (Q₂=Q₁*10%) at 1 C constant current, that is, the battery capacity reached 10% of SOC. After standing for 10 min, voltage of the battery at this time was first recorded as U₀. The battery was discharged at 5 C constant current for a discharge time of 18 s, and voltage of the battery at this time was recorded as U₁. Discharge direct current internal resistance DCIR of the battery under 10% of SOC was =(U₀-U₁)/5C.

Data obtained are shown in Table 2 below.

**Table 2 Table of Data of Electrical Performances**

| | Capacity per Gram (mAh/g) | Initial Coulombic Efficiency (%) | 100-cycle Capacity Retention Rate (%) | Rate Capability (%) | Resistivity (Ω·cm) | DCIR (Mω) |
|---|---|---|---|---|---|---|
| Example 1 | 1856 | 93.12 | 99.08 | 63.67 | 4.88 | 2.11 |
| Example 2 | 1842 | 93.06 | 99.09 | 63.18 | 5.62 | 2.19 |
| Example 3 | 1853 | 93.10 | 98.96 | 60.13 | 4.65 | 2.06 |
| Example 4 | 1843 | 93.02 | 99.05 | 62.94 | 4.30 | 2.27 |
| Example 5 | 1859 | 93.14 | 99.21 | 65.15 | 7.16 | 2.04 |
| Example 6 | 1851 | 93.21 | 99.31 | 66.34 | 2.67 | 2.02 |
| Example 7 | 1856 | 93.18 | 99.27 | 68.72 | 1.91 | 1.94 |
| Example 8 | 1852 | 93.11 | 98.97 | 61.07 | 4.76 | 2.24 |
| Example 9 | 1854 | 93.09 | 98.75 | 60.45 | 4.95 | 2.22 |
| Example 10 | 680 | 93.15 | 99.69 | 71.52 | 1.06 | 1.26 |
| Example 11 | 2561 | 93.05 | 98.78 | 60.34 | 8.15 | 2.01 |
| Comparative Example 1 | 1838 | 92.61 | 95.35 | 53.47 | 12.56 | 2.43 |

It can be seen from Table 2 that the silicon contents in the silicon-carbon composite materials obtained in Examples 1~11 and Comparative Example 1 were not greatly different, and therefore the capacities per gram were close. Compared with Comparative Example 1, in Example 1~11, due to introduction of the second carbon material, the electroconductive network was constructed in the C/C composite porous material, the resistivity and DCIR of the silicon-carbon composite materials were remarkably lower than those in Comparative Example 1, and meanwhile, the ion-conducting capability of the silicon-carbon composite materials was also improved, being embodied in obviously higher rate capability than that in Comparative Example 1, wherein the surfaces of the silicon-carbon composite materials obtained in Examples 6 and 7 respectively had the CNT coating layer and composite coating layer of the CNT and lithium phosphate, and the resistivity, the rate capability and the DCIR thereof were optimized more significantly. The second carbon material has good flexibility, can increase the strength of the silicon-carbon composite material, improve the structural stability of the material, and further improve the cycling stability; therefore, the initial Coulombic efficiencies and the cycle capacity retention rates after 100 cycles of the silicon-carbon composite materials obtained in Examples 1~11 are all higher than those in Comparative Example 1.

Compared with Example 8 and Example 9, Examples 1~3 employed the single-walled carbon nanotubes as the second carbon material. The single-walled carbon nanotubes have higher Young's modulus than the multi-walled carbon nanotubes, and meanwhile have a smaller tube diameter, better flexibility and higher strength, and enable higher stability of the formed C/C composite porous material, and thus higher stability of the silicon-carbon composite material. Therefore, the cycling stability of the composite materials in Examples 1~3 was superior to those in Example 8 and Example 9. In Example 8, the multi-walled carbon nanotubes had a relatively large tube diameter and greatly reduced flexibility, and a high addition amount thereof was required to form a suitable electroconductive network in the composite material, and thus many closed pores were formed in the composite material, which reduced the compacted density of the material and decreased the structural stability during the cycling.

Compared with Example 1, in Example 5, a doping element O was introduced to separate and wrap the silicon nanoparticles, so that the electrical conductivity and ion-conducting performance of silicon region were improved, and the rate capability was higher than that in Example 1.

Example 10 and Example 11 were cases of relatively low and relatively high silicon contents, respectively. In the composite material in Example 10, the silicon content was low, and thus the specific capacity was low. On the other hand, as CNT content was relatively high, the rate capability, resistivity and DCIR thereof were all quite low, and the material exhibited excellent cycling stability. Example 11 had a relatively high silicon content and thus relatively high specific capacity, but the cycling stability was worse than that in Example 10.

Finally, it should be noted that various examples above are merely used for illustrating the technical solutions of the present application, rather than limiting the present application. Although detailed description is made to the present application with reference to various preceding examples, those ordinarily skilled in the art should understand that they still could modify the technical solutions recited in various preceding examples, or make equivalent substitutions to some or all of the technical features therein. These modifications or substitutions do not make corresponding technical solutions essentially depart from the scope of the technical solutions of various examples of the present application.

### INDUSTRIAL APPLICABILITY

The method of the present application improves the cycling stability and structural stability of the silicon-carbon composite material, which is conducive to industrialization of the silicon-carbon composite material.

## Claims

1. A silicon-carbon composite material, **characterized by** being composed of silicon-carbon composite material particles,
wherein the silicon-carbon composite material particles comprise a C/C composite porous material and silicon nanoparticles located in pore channels and on a surface of the C/C composite porous material;
the C/C composite porous material comprises a first carbon material and a second carbon material;
the first carbon material is a porous carbon matrix, and the second carbon material is distributed throughout an interior of the C/C composite porous material and further throughout the silicon-carbon composite material; and
a size of the second carbon material in at least one dimension is greater than 100 nm.

2. The silicon-carbon composite material according to claim 1, wherein a proportion of the second carbon material in the C/C composite porous material is 0.01~10 wt.%, and the second carbon material comprises at least one selected from the group consisting of carbon nanotube, graphene, carbon black and carbon fiber;
preferably, a size of the second carbon material in a first dimension is L, satisfying 100 nm<L<100 µm, and a size of the second carbon material in a second dimension is a, satisfying 0<a<20 nm; and
further preferably, the L satisfies 100 nm<L<20 µm, and the a satisfies 0<a<10 nm.

3. The silicon-carbon composite material according to claim 1 or 2, wherein a post-compaction specific surface area of the silicon-carbon composite material is 1~20 times a specific surface area of the silicon-carbon composite material, preferably 1~10 times, and further preferably 1~5 times.

4. The silicon-carbon composite material according to claim 1 or 2, wherein a pore volume of the C/C composite porous material is 0.2~3.0 cm³/g, and wherein a volume proportion of micropores is greater than 50%;
preferably, the pore volume of the C/C composite porous material is 0.4~1.5 cm³/g, and wherein the volume proportion of the micropores is greater than 70%.

5. The silicon-carbon composite material according to claim 1 or 2, wherein a diameter of the silicon nanoparticles is 0.5~5 nm, and preferably, a content of silicon element in the silicon-carbon composite material is 5~80 wt.%.

6. The silicon-carbon composite material according to claim 1, further comprising a heteroatom X located in the pore channels of the C/C composite porous material, wherein the heteroatom X comprises at least one selected from the group consisting of B, N, P, O and S, and the heteroatom X forms an Si-X chemical bond with a silicon atom in the silicon nanoparticles and separates and wraps the silicon nanoparticles; and
preferably, a content of the heteroatom in the silicon-carbon composite material is 0~10 wt.%.

7. The silicon-carbon composite material according to claim 1, wherein a surface of the silicon-carbon composite material particles has a coating layer; preferably, a material of the coating layer on the surface is one or more selected from the group consisting of a solid electrolyte, an electroconductive polymer, a carbonaceous material, a metal, an alloy, a metal oxide, a metal halide, a metal sulfide, a metal phosphate, a borate, a sulfate, a nitrate and a multi-metal oxysalt.

8. The silicon-carbon composite material according to claim 7, wherein the surface of the silicon-carbon composite material particles has a coating layer of a mesh structure, and preferably, a material of the coating layer comprises at least one selected from the group consisting of carbon nanotube, graphene, carbon black or carbon fiber.

9. The silicon-carbon composite material according to claim 1, wherein the silicon-carbon composite material has a specific surface area of 0.1~50 m²/g and a pore volume of 0.01~0.5 cm³/g;
preferably, the silicon-carbon composite material has the specific surface area of 0.1~10 m²/g and the pore volume of 0.01~0.1 cm³/g; and/or
the silicon-carbon composite material has a true density of 1.3~2.0 g/cm³ and a closed-pore volume of 0.01~0.25 cm³/g.

10. A preparation method for the silicon-carbon composite material according to any one of claims 1-9, comprising following steps:
step S1, providing a C/C composite porous material, wherein the C/C composite porous material comprises a first carbon material and a second carbon material; the first carbon material is a porous carbon matrix, and the second carbon material is distributed throughout an interior of the C/C composite porous material;
step S2, making a silicon-containing precursor contact the C/C composite porous material, to carry out chemical vapor deposition, so that silicon nanoparticles are distributed in pore channels and on a surface of the C/C composite porous material, to obtain the silicon-carbon composite material,
wherein the C/C composite porous material, the first carbon material, the second carbon material and the silicon nanoparticles respectively have same meanings as those in claims 1-9.

11. The preparation method according to claim 10, wherein a preparation method for the C/C composite porous material comprises introducing the second carbon material to at least one process of different preparation processes during preparation of the porous carbon material, and wherein the preparation processes comprise a carbon precursor process, a carbon precursor pre-stabilization process, a carbonizing process, a further pore-forming process and a finished carbon material process;
preferably, the first carbon material precursor is mixed with the second carbon material, and a mixture is sintered in an inert atmosphere or a mixed atmosphere of an inert gas and an oxygen-containing gas, to obtain the C/C composite porous material; or
the first carbon material precursor is sintered in the inert atmosphere to obtain the first carbon material, then the first carbon material is mixed with the second carbon material, and a mixture is sintered to obtain the C/C composite porous material,
wherein the first carbon material precursor comprises at least one selected from the group consisting of a polymer precursor, a biomass precursor and a fossil carbon source.

12. The preparation method according to claim 10, wherein in step S2, the silicon-containing precursor contacts the C/C composite porous material at a temperature of 150~1,000 °C for a time of 1~100 h; and/or
when the silicon-containing precursor is made to contact the C/C composite porous material, a heteroatom-containing precursor is introduced, wherein the silicon-containing precursor and the heteroatom-containing precursor contact the C/C composite porous material at a temperature of 150~1,000 °C for 1~100 h; and/or
the silicon-containing precursor comprises at least one selected from the group consisting of monosilane, disilane, trisilane, halosilane, polysilane, silole and derivatives thereof, and silafluorene and derivatives thereof; and/or
the heteroatom-containing precursor comprises at least one selected from the group consisting of a nitrogen-containing precursor, a phosphorus-containing precursor, a sulfur-containing precursor or a boron-containing precursor.

13. A negative electrode, **characterized in that** the negative electrode comprises the silicon-carbon composite material according to any one of claims 1-9 or the silicon-carbon composite material obtained by the preparation method according to any one of claims 10-12.

14. A battery, **characterized by** comprising a positive electrode, a negative electrode, an electrolytic solution and a separator, wherein the negative electrode comprises the silicon-carbon composite material according to any one of claims 1-9 or the silicon-carbon composite material obtained by the preparation method according to any one of claims 10-12.
